(19) **Europäisches Patentamt**
European Patent Office
Office européen des brevets

(11) **EP 1 712 765 B1**

(12) **EUROPÄISCHE PATENTSCHRIFT**

(45) Veröffentlichungstag und Bekanntmachung des Hinweises auf die Patenterteilung:
**07.05.2008 Patentblatt 2008/19**

(51) Int Cl.:
*F02D 41/06* (2006.01) *F02D 41/34* (2006.01)

(21) Anmeldenummer: **06110715.7**

(22) Anmeldetag: **06.03.2006**

(54) **Verfahren zur Erhöhung der Start-Reproduzierbarkeit bei Start-Stopp-Betrieb einer Brennkraftmaschine**

Method to increase the engine start repeatability of an internal combustion engine operated in start-stop mode

Procédé pour l'amélioration de la répétabilité du démarrage d'un moteur à combustion interne fonctionnant en mode start-stop

(84) Benannte Vertragsstaaten:
**DE FR GB**

(30) Priorität: **07.04.2005 DE 102005016067**

(43) Veröffentlichungstag der Anmeldung:
**18.10.2006 Patentblatt 2006/42**

(73) Patentinhaber: **VDO Automotive AG**
**93055 Regensburg (DE)**

(72) Erfinder:
• **Beer, Johannes**
**93051, Regensburg (DE)**
• **Herfurth, Roland**
**93051, Regensburg (DE)**

(56) Entgegenhaltungen:
**EP-A- 1 422 421          DE-A1- 4 304 163**
**DE-A1- 10 304 449       DE-A1- 10 335 016**
**DE-A1- 19 741 294       DE-C1- 10 056 863**

**Beschreibung**

Die vorliegende Erfindung betrifft ein Verfahren zur Verbesserung der Start-Optimierung der Brennkraftmaschine eines Kraftfahrzeugs, das im Start-Stopp-Betrieb genutzt wird.

Um den Kraftstoffverbrauch in Kraftfahrzeugen zu senken, erfolgt bei Stillstand des Kraftfahrzeugs ein Anhalten oder Stoppen der Brennkraftmaschine gefolgt von einem erneuten Starten, sobald das Kraftfahrzeug weiter fahren soll. Dieser Start-Stopp-Betrieb wird mit einer Start-Optimierung eingesetzt, die ein Starten der Brennkraftmaschine ermöglicht, noch bevor eine Synchronisation mit der Kurbelwelle stattgefunden hat. Voraussetzung für die Start-Optimierung ist die Kenntnis der Motorposition nach dem Stoppen der Brennkraftmaschine, so dass bei Erkennen einer ersten Zahnflanke des Kurbelwellengebers die aktuelle Motorposition bis zur Synchronisation durch Inkrementierung ermittelt werden kann. Nach der Synchronisation wird der Startvorgang in herkömmlicher Weise fortgesetzt.

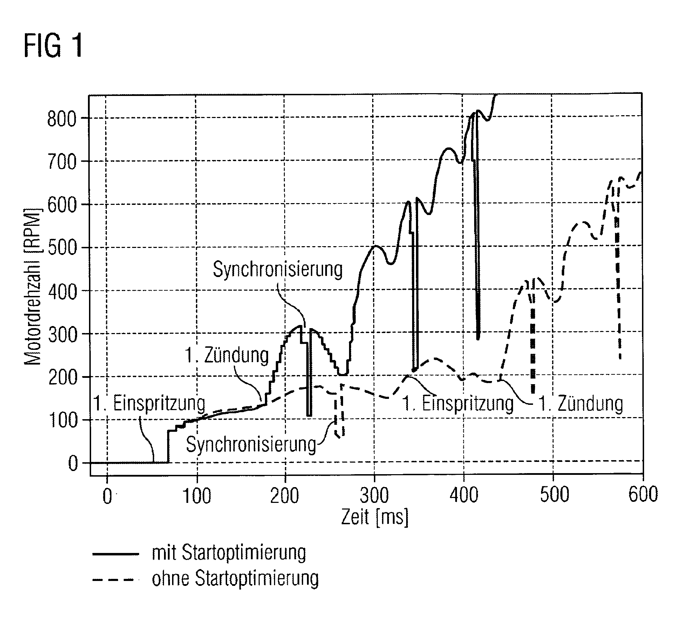

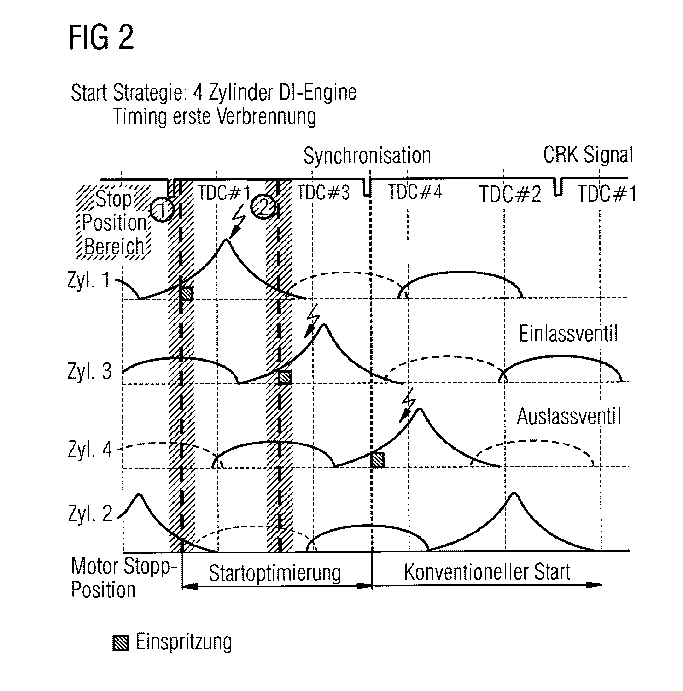

Die unterschiedlichen Drehzahlverläufe einer hochlaufenden Brennkraftmaschine mit Direkteinspritzung, die mit oder ohne Start-Optimierung betrieben wird, sind in Fig. 1 gezeigt. Die gestrichelte Kurve zeigt einen Drehzahlverlauf für einen Betrieb ohne Startoptimierung, während die durchgezogene Kurve den Drehzahlverlauf für einen Betrieb mit Start-Optimierung wiedergibt. Die Drehzahlverläufe sind über derselben Zeitachse aufgetragen, so dass ein direkter zeitlicher Vergleich beider Drehzahlverläufe möglich ist. Man erkennt, dass zum Zeitpunkt t=430 ms die Brennkraftmaschine mit Start-Optimierung bereits Leerlaufdrehzahl erreicht hat, während die Brennkraftmaschine mit herkömmlicher Startstrategie zu diesem Zeitpunkt zum ersten Mal zündet. Die Kurve für den Betrieb mit Start-Optimierung zeigt starke Drehzahlschwankungen während des Hochlaufens. Diese Schwankungen entstehen auf Grund der Einflüsse der durch den Zylinder zu verrichtenden Kompressionsarbeit, der Reibung und durch eine diskontinuierliche Momentenfreisetzung. Ein derartiger Start-Stopp-Betrieb wird durch die DE 43 04 163 A1 offenbart, deren Start-Optimierung in Fig. 2 dargestellt ist. Man kann erkennen, dass die unterschiedlichen Zylinderfüllungen der ersten Verbrennung beispielsweise bei einer Vier-Zylinder-Brennkraftmaschine während der Start-Optimierung, d. h. vor der Synchronisation, von der Stoppposition der Brennkraftmaschine abhängen. Bei einer Brennkraftmaschine mit mehr als vier Zylindern sind auch mehrere erste Verbrennungen während der Start-Optimierung möglich, die das Startverhalten der Brennkraftmaschine beeinflussen. Die Abhängigkeit von der Stoppposition ergibt sich im Speziellen für direkt einspritzende Brennkraftmaschinen. Denn nur bei direkter Einspritzung nach dem Schließen des Einlassventils kann noch Kraftstoff in den Brennraum eingebracht und so eine Verbrennung einer von der Stoppposition abhängigen Zylinderfüllung realisiert werden. Bei Saugrohreinspritzern ist hingegen die Einspritzung am Ende der Ansaugphase abgeschlossen, so dass sich bei der Start-Optimierung eines Saugrohreinspritzers immer eine maximale Zylinderfüllung für die erste Verbrennung ergibt.

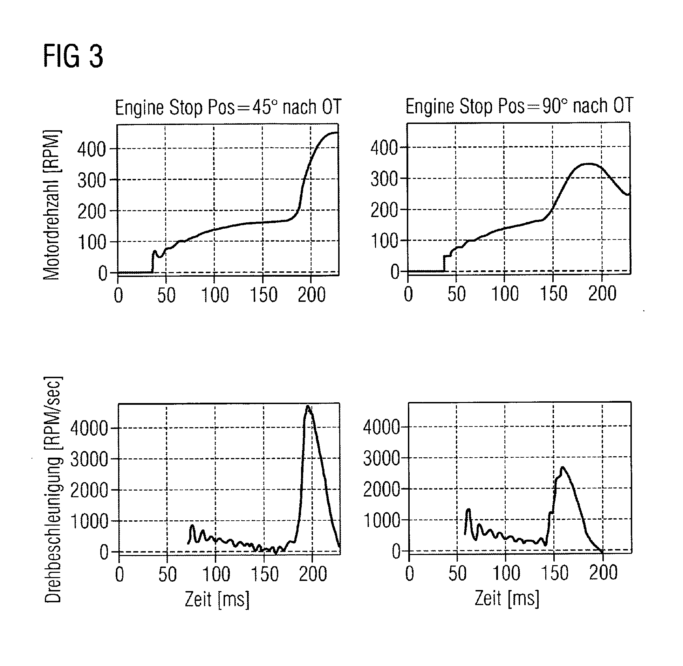

Wie Fig. 2 zeigt, sind je nach Stoppposition einer Brennkraftmaschine mit vier Zylindern eine oder mehrere Verbrennungen während der Start-Optimierung möglich. Die Stopppositionen und die weiter hier diskutierten Positionen werden jeweils als Kurbelwellenwinkel angegeben. Diese Verbrennungen gestalten aufgrund ihrer Zylinderfüllungen den variierenden Drehzahlverlauf bis zur Synchronisation. Aufgrund dieser variierenden Ausgangsbedingungen der jeweiligen Verbrennung während der Start-Optimierung wird chemische Energie nicht reproduzierbar in kinetische Energie umgewandelt. Dies ist beispielgebend in Fig. 3 dargestellt, die vergleichend die Drehzahlverläufe sowie die Drehbeschleunigungen eines Starts der Brennkraftmaschine ausgehend von einer Stoppposition von 45° nach dem oberen Totpunkt und von 90° nach dem oberen Totpunkt zeigt. Man erkennt, dass die Drehbeschleunigung mit ca. 4500 $U \cdot min^{-1} \cdot s^{-1}$ bei einer Stoppposition von 45° nach dem oberen Totpunkt fast doppelt so groß ist wie die Drehbeschleunigung von 2600 $U \cdot min^{-1} \cdot s^{-1}$ bei einer Stoppposition von 90° nach dem oberen Totpunkt. Diese unterschiedliche Dynamik während der Start-Optimierung führt gerade bei Fahrzeugen mit längs eingebauter Brennkraftmaschine aufgrund der Drehimpulserhaltung zu einem Gegenmoment, das an der Fahrzeuglängsachse wirkt. In Abhängigkeit von der Stoppposition ist dieses Gegenmoment unterschiedlich groß und erzeugt eine entsprechende Wankneigung des Kraffahrzeugs. Der Fahrer des Kraftfahrzeugs wird diese Wankneigung als eine "Unruhe" im Kraftfahrzeug oder als eine Störung seines "Startgefühls" wahrnehmen. Für das Wohlbefinden des Fahrers ist daher eine Reproduzierbarkeit des Startverhaltens einer Brennkraftmaschine unabhängig von ihrer Stoppposition im Start-Stopp-Betrieb erforderlich.

Es ist daher die Aufgabe der vorliegenden Erfindung, ein Verfahren zur Erhöhung der Start-Reproduzierbarkeit einer Brennkraftmaschine eines Kraftfahrzeugs mit Start-Optimierung bereitzustellen.

Die obige Aufgabe wird durch das im unabhängigen Anspruch 1 definierte Verfahren gelöst. Vorteilhafte Ausgestaltungen und Weiterentwicklungen des Verfahrens sind in der folgenden Beschreibung und in den abhängigen Ansprüchen dargelegt.

Das vorliegende Verfahren ist darauf gerichtet, dass im Rahmen der Start-Optimierung einer Brennkraftmaschine im Start-Stopp-Betrieb ein reproduzierbares Startverhalten der Brennkraftmaschine bzw. eine Start-Reproduzierbarkeit erzeugt wird, um den Start-Stopp-Betrieb für den Nutzer des Kraftfahrzeugs so komfortabel wie möglich zu gestalten. Es erhöht die Start-Reproduzierbarkeit, indem ausgehend von einer Stoppposition der Brennkraftmaschine zunächst ein möglicher maximaler Drehzahlgradient für die erste oder die ersten Verbrennungen in der Start-Optimierungsphase berechnet wird. Ob während der Start-Optimierungsphase nur eine oder eine Mehrzahl von ersten Verbrennungen zu berücksichtigen ist, richtet sich nach der Zylinderanzahl der Brennkraftmaschine und der somit jeweils in den verschiedenen Zylindern möglichen ersten Verbrennung vor der Synchronisation. Dieser maximale Drehzahlgradient ergibt sich aus der optimalen Ausnutzung der bei dieser Stoppposition der Brennkraftmaschine möglichen maximalen Zylinderbefüllung mit Kraftstoff und Luft sowie aus der Umsetzung dieser Zylinderfüllung mit Hilfe eines optimalen Zündwinkels.

Da mit der vorliegenden Erfindung gerade nicht der jeweils maximal mögliche Drehzahlgradient der ersten Verbrennung oder Verbrennungen während der Start-Optimierung realisiert werden soll, wird in einem weiteren Schritt der maximale Drehzahlgradient auf einen festgelegten Drehzahlgradienten reduziert, der für verschiedene Stopp-Positionen der Brennkraftmaschine realisierbar ist. Der festgelegte Drehzahlgradient wird derart gewählt, dass er dem maximalen Drehzahlgradienten der am häufigsten auftretenden Stoppposition der betrachteten Brennkraftmaschine entspricht. Da die am häufigsten auftretende Stoppposition durch die Eigenschaften der Brennkraftmaschine beeinflusst wird, kann auch der festgelegte Drehzahlgradient für unterschiedliche Brennkraftmaschinen verschieden sein. Der Drehzahlgradient einer Stoppposition, die vor der Stoppposition des festgelegten Drehzahlgradienten, d.h. bei kleinerem Kurbelwellenwinkel, liegt, kann durch das nachfolgend beschriebene Verfahren auf den festgelegten Drehzahlgradienten reduziert werden. Es kann aber auch eine Stoppposition auftreten, die nach der am häufigsten auftretenden Stoppposition liegt. In diesem Fall kann der Drehzahlgradient der ersten Verbrennung nicht auf den festgelegten Drehzahlgradienten gesteigert werden. Aus diesem Grund wird bevorzugt ein festgelegter Drehzahlgradient gewählt, der einer Stoppposition mit größerem Kurbelwellenwinkel als der häufigsten Stoppposition der Brennkraftmaschine entspricht. Der festgelegte Drehzahlgradient kann daher trotz unterschiedlicher Stopppositionen erzeugt werden, weil der jeweils maximale Drehzahlgradient der einzelnen Stoppposition größer oder gleich dem festgelegten Drehzahlgradienten ist. Reduziert man nun gezielt den jeweils maximalen Drehzahlgradienten auf den festgelegten Drehzahlgradienten, erhält man die gewünschte Reproduzierbarkeit. Diese Reproduzierbarkeit während der Start-Optimierung gewährleistet dem Nutzer des Kraftfahrzeugs ein gleichmäßiges Verhalten der Brennkraftmaschine und auf diese Weise ein komfortables "Startgefühl". Der maximale Drehzahlgradient kann auf den festgelegten Drehzahlgradienten reduziert werden, indem mit Hilfe einer Zündwinkel-Spätverstellung die Effizienz der ersten Verbrennung oder der ersten Verbrennungen und/oder mit einer Einlassventil-Spätverstellung die Zylinderfüllung für die erste oder ersten Verbrennungen gezielt auf den gewünschten Wert angepasst wird.

Zur Vereinfachung und Beschleunigung des Verfahrens wird gemäß einer Ausführungsform auf ein Kennfeld für den maximalen Drehzahlgradienten zurückgegriffen, das den maximalen Drehzahlgradienten bei optimalem Zündwinkel und optimaler Kraftstoffmenge in Abhängigkeit von der Stoppposition der Brennkraftmaschine und einer Motortemperatur wiedergibt. Dieser dem Kennfeld zu entnehmende maximale Drehzahgradient wird dann mit einem für verschiedene Stopppositionen festgelegten Drehzahlgradienten ins Verhältnis gesetzt, um darüber die Effizienz der ersten Verbrennung bzw. Verbrennungen der Start-Optimierung einstellen zu können. Dieses Verhältnis bildet den Zündwinkel-Wirkungsgrad, der angibt, wie stark der maximal mögliche Drehzahlgradient für die vorliegende Stoppposition reduziert werden muss, um ein reproduzierbares und für den Fahrer angenehmes "Startgefühl" des Kraftfahrzeuges zu erzielen.

Sollte die Brennkraftmaschine mit einer Verstellung der Zeitpunkte für das Öffnen und Schließen der Einlassventile arbeiten, kann auf diese Weise ebenfalls der für eine bestimmte Stoppposition der Brennkraftmaschine erzielbare maximale Drehzahlgradient angepasst werden. In dieser Ausführungsform des vorliegenden Verfahrens wird die Einlassventil-Spätverstellung ebenfalls in der Berechnung des ZündwinkelWirkungsgrads berücksichtigt.

Um abschließend die Effizienz der ersten Verbrennung/Verbrennungen während der Start-Optimierung gezielt zu reduzieren, wird aus dem Zündwinkel-Wirkungsgrad ein Zündwinkel-Offset berechnet, um den der optimale Zündwinkel der ersten Verbrennung oder Verbrennungen in Richtung spät verschoben wird. Auf diese Weise wird zwar die Effizienz der Verbrennung während der Start-Optimierung reduziert, gleichzeitig werden aber die für ein angenehmes "Startgefühl" erforderlichen reproduzierbaren Kolbenkräfte gewährleistet.

Die begleitenden Zeichnungen zeigen:

Fig. 1     eine vergleichende Darstellung der Motordrehzahl für eine Brennkraftmaschine mit Start-Optimierung und eine Brennkraftmaschine ohne Start-Optimierung,

Fig. 2     die Darstellung einer Start-Optimierung mit einer in Bezug auf den Zünd-OT definierten Stoppposition, wie sie aus dem Stand der Technik bekannt ist,

Fig. 3     den Vergleich der ersten startoptimierten Zündung bei der Stoppposition von 45° nach dem oberen Totpunkt und bei der Stoppposition von 90° nach dem oberen Totpunkt.

Beim Abstellen eines Kraftfahrzeugs bleibt die Brennkraftmaschine nach dem Zufallsprinzip in unterschiedlichen Stopppositionen $\alpha_{stopp}$ stehen. In Abhängigkeit von der Drosselklappenöffnung ergibt sich dabei eine mittlere Abstellposition von ca. 90° Kurbelwellenwinkel nach dem oberen Totpunkt. Die auftretenden Stopppositionen sind um diesen als Mittellage angenommenen Winkel annähernd gaussverteilt. Es ist jedoch ebenfalls denkbar, dass Brennkraftmaschinen aufgrund ihres Aufbaus, ihrer Zylinderzahl oder aufgrund anderer Konfigurationsdaten eine andere mittlere Abstellposition $\alpha_{stopp}$ zeigen.

Um die Reproduzierbarkeit des Startverhaltens in Abhängigkeit von der Stoppposition zu erzeugen, d. h. um für die verschiedensten Stopppositionen einer Brennkraftmaschine immer wieder den gleichen Drehzahlgradienten beim erneuten Starten zu erzielen, wird ein Verfahren angewandt, mit dem die Effizienz der ersten Verbrennung der Start-Optimierung - also die Verbrennungen vor der Synchronisation - gezielt reduziert wird. Dieses Verfahren kann sich ebenfalls auf eine Mehrzahl von ersten Verbrennungen der Start-Optimierung erstrecken, wie sie bei einer mehrzylindrigen Brennkraftmaschine auftreten kann. Dadurch wird ein annähernd konstanter Drehzahlgradient aus jeder beliebigen Stoppposition heraus generiert, weil diese die gleiche oder eine größere Zylinderfüllung als eine unten näher erklärte Soll-Stoppposition (Referenzposition) aufweist.

Die Effizienz der Verbrennung während der Start-Optimierung wird einerseits über die Verstellung des Zündwinkels oder andererseits über die im Zylinder zur Verfügung stehende Luftmenge eingestellt. Es ist ebenfalls bevorzugt, beide Einstellverfahren für die Steuerung des Start-Stopp-Betriebs einer Brennkraftmaschine kombiniert zu nutzen.

Zunächst erfolgt als Grundlage für das vorliegende Verfahren die Bestimmung der Stoppposition $\alpha_{stopp}$ der Brennkraftmaschine beispielsweise mit Hilfe eines Kurbelwellengebers. Dieser Kurbelwellengeber erfasst den Kurbelwellenwinkel auch nach Abschalten der Brennkraftmaschine. Die Stoppposition $\alpha_{stopp}$ legt den durch die Brennkraftmaschine erzielbaren maximalen Drehzahlgradienten $\omega_{max}$ der ersten Verbrennung/Verbrennungen fest, für die noch keine vollständige Zylinderfüllung vorliegt, wenn die Brennkraftmaschine während der Start-Optimierung erneut gestartet wird. Der maximale Drehzahlgradient $\omega_{max}$ ergibt sich ausgehend von der Stoppposition $\alpha_{stopp}$, der bei dieser Stoppposition $\alpha_{stopp}$ möglichen optimalen Zylinderfüllung mit Luft und Kraftstoff und der Annahme, dass diese Zylinderfüllung bei optimalem Zündwinkel gezündet wird. Es können auch noch weitere Parameter zur Bestimmung des maximalen Drehzahlgradienten $\omega_{max}$ berücksichtigt werden, wie beispielsweise die Motortemperatur TCO oder eine die Motortemperatur repräsentierende Größe, beispielsweise die Temperatur des Kühlmittels des Motors. Gemäß einer Ausführungsform ist der maximale Drehzahlgradient als eine Funktion von der Stoppposition und der Motortemperatur $\omega_{max}=\omega_{max}(\alpha_{stopp}, TCO)$ unter der Annahme einer optimalen Einspritzmenge, eines optimalen Zündwinkels und eines optimalen Einlassventil-Schließens bestimmt.

Um den Aufwand zur Berechnung des maximalen Drehzahlgradienten $\omega_{max}$ durch das Betriebssteuergerät der Brennkraftmaschine zu begrenzen, wird bevorzugt der entsprechend der StoppPosition $\alpha_{stopp}$ mögliche maximale Drehzahlgradient $\omega_{max}$ nicht ständig neu berechnet, sondern aus einem gespeicherten Kennfeld ausgelesen. Ein derartiges Kennfeld kann beispielsweise für jeden Typ einer Brennkraftmaschine empirisch ermittelt und dann in dem Betriebssteuergerät abgespeichert werden. Aus dem bevorzugten Kennfeld wird nach Bestimmen der Stoppposition $\alpha_{stopp}$ und der Temperatur TCO der Brennkraftmaschine der entsprechende maximale Drehzahlgradient $\omega_{max}$ ausgelesen, während ebenfalls die obigen Annahmen gelten.

Um die aufgrund der unterschiedlichen Stopppositionen $\alpha_{stopp}$ erzielbaren maximalen Drehzahlgradienten $\omega_{max}$ auf ein gemeinsames Drehzahlgradientenniveau zu bringen, wird die Soll-Stoppposition $\alpha_{stopp-soll}$ festgelegt. Diese Soll-Stoppposition $\alpha_{stopp-soll}$ zeichnet sich dadurch aus, dass die allgemein üblichen Stopppositionen $\alpha_{stopp}$ der Brennkraftmaschine an oder vor dieser Position liegen. Obwohl auch ein geringer Anteil der Stopppositionen hinter der Soll-Stoppposition liegen kann, ist die Soll-Stoppposition derart gewählt, dass eine effektive Startoptimierung mit kurzen Startzeiten erzielt wird. Basierend auf dieser Auswahl wird gewährleistet, dass der ausgehend von der Soll-Stoppposition $\alpha_{stopp-soll}$ erreichbare maximale Drehzahlgradient aus jeder Stopp- oder Auslaufposition der Brennkraftmaschine nicht überschritten wird. Dies erfolgt mit optimaler Zylinderfüllung und optimalem Zündwinkel bei Übereinstimmung der Stoppposition $\alpha_{stopp}$ mit der Soll-Stoppposition $\alpha_{stopp-soll}$. Bei einer Stoppposition $\alpha_{stopp}$ kleiner als die Soll-Stoppposition $\alpha_{stopp-soll}$ ergibt sich eine größere Zylinderfüllung im Vergleich zur Soll-Stoppposition (Referenzposition), so dass mit reduzierter Effizienz der ersten Verbrennung/Verbrennungen der maximale Drehzahlgradient der Soll-Stoppposition $\alpha_{stopp-soll}$ eingestellt wird. Dieser aus der Soll-Stoppposition $\alpha_{stopp-soll}$ bei optimalen Bedingungen erreichbare maximale Drehzahlgradient wird als festgelegter Drehzahlgradient bezeichnet. Es ist ebenfalls bevorzugt, den festgelegten Drehzahlgradienten in Abhängigkeit von weiteren Betriebsparametern der Brennkraftmaschine, wie beispielsweise eine Soll-Motortemperatur $TCO_{soll}$, zu definieren.

Liegt die Stoppposition $\alpha_{stopp}$ vor der Soll-Stoppposition $\alpha_{stopp-soll}$, wie es aufgrund der Wahl der Soll-Stoppposition $\alpha_{stopp-soll}$ bei beispielsweise 90° nach dem oberen Totpunkt der Fall ist, kann über eine Verminderung des Zündwinkelwirkungsgrads $\eta_{IGA}$ der Drehzahlgradient der ersten Verbrennung während der Start-Optimierung auf den maximalen Drehzahlgradienten entsprechend der Soll-Stoppposition $\alpha_{stopp-soll}$ vermindert werden. Des Weiteren kann eine Abweichung weiterer Betriebsparameter der Brennkraftmaschine von ihrem Soll-Wert mit Hilfe der Verminderung des Zündwinkelwirkungsgrads ausgeglichen werden. Ein Beispiel dafür ist die Motortemperatur TCO, deren Abweichung von der Soll-Motortemperatur $TCO_{soll}$ kompensiert wird. Der Zündwinkelwirkungsgrad $\eta_{IGA}$ berechnet sich als Funktion von der Stoppposition $\alpha_{stopp}$ und der Motortemperatur TCO gemäß dem folgenden Quotienten:

$$\eta_{IGA}\left(\alpha_{Stopp},\ TCO\right) = \frac{\omega_{max}(\alpha_{Stopp-Soll},\ TCO_{Soll})}{\omega_{max}(\alpha_{Stopp},\ TCO)}.$$

mit      $\alpha_{stopp} \leq \alpha_{stopp-soll}$,

$\eta_{IGA}$      Zündwinkelwirkungsgrad,

$\alpha_{Stopp}$      Stoppposition,

TCO      Motortemperatur,

$TCO_{SOLL}$      Motorsolltemperatur

$\omega_{max}$      maximaler Drehzahlgradient,

$\alpha_{stopp-soll}$      Soll-Stoppposition.

Gemäß einer weiteren Ausführungsform des vorliegenden Verfahrens lässt sich der Drehzahlgradient nicht nur über den Zündwinkelwirkungsgrad und die nachfolgende Zündwinkelverstellung, sondern ebenfalls über das Anpassen der im Zylinder befindlichen Luftmenge einstellen. Diese Einstellmöglichkeit kann allein oder in Kombination mit der Spätverstellung des Zündwinkels angewandt werden. Die Luftmenge, die im Zylinder im ersten Kompressionstakt verdichtet wird, lässt sich durch eine Verstellung der Einlass-Nockenwelle nach spät verringern. Bliebe die Brennkraftmaschine in einer Stoppposition $\alpha_{stopp}$ am unteren Totpunkt stehen, würde sich eine maximale Zylinderfüllung mit Luft und Kraftstoff und somit auch ein möglicher maximaler Drehzahlgradient ergeben. Wird die Einlass-Nockenwelle nun auf maximal spät gestellt, so dass ein Schließen des Einlassventils bei beispielsweise 70° nach dem unteren Totpunkt erfolgt, so wird bis zum Schließen des Einlassventils (EVS) ein Teil der Luft während des Kompressionstaktes ins Saugrohr zurückgeschoben. Auf diese Weise lässt sich für eine Stoppposition $\alpha_{stopp}$ vor dem Schließen des Einlassventils EVS eine von der Stoppposition $\alpha_{stopp}$ unabhängige Zylinderfüllung einstellen, die jedoch durch das Schließen des Einlassventils eingestellt wird. Der erzielbare Drehzahlgradient entspricht in diesem Fall einer Stoppposition $\alpha_{stopp}$, die der Schließposition EVS des Einlassventils gleich ist (vgl. die unten stehende Formel). Die oben beschriebene Beeinflussung der Zylinderfüllung über eine Verstellung der Einlass-Nockenwelle setzt ein Verstellsystem voraus, das auch bei Stillstand der Brennkraftmaschine betrieben werden kann. Dies ist beispielsweise mit elektrischen Nockenwellenstellern oder mit einer elektrischen Ventilsteuerung in nockenwellenlosen Brennkraftmaschinen möglich.

Wird, wie oben beschrieben, die Zylinderfüllung über spätes Schließen des Einlassventils vermindert, so ist die Stoppposition $\alpha_{stopp}$ durch die Schließposition EVS des Einlassventils definiert, da erst die Schließposition die Zylinderfüllung und den damit möglichen maximalen Drehzahlgradienten $\omega_{max}$ bei optimalen Bedingungen festlegt. Angewandt auf diese Randbedingungen der Brennkraftmaschine lässt sich auch hier der bereits oben genannte Zündwinkelwirkungsgrad $\eta_{IGA}$ mit Hilfe der folgenden Gleichung berechnen.

$$\eta_{IGA}\left(\alpha_{Stopp},\ TCO\right) = \frac{\omega_{max}(\alpha_{Stopp-Soll},\ TCO_{Soll})}{\omega_{max}(\alpha_{Stopp} = EVS,\ TCO)}.$$

für      $\alpha_{stopp} \leq \alpha_{stopp-soll}$,

und      $EVS \leq \alpha_{stopp-soll}$,

$\eta_{IGA}$      Zündwinkelwirkungsgrad,

$\alpha_{Stopp}$      Stoppposition,

TCO      Motortemperatur,

TCO$_{SOLL}$     Motorsolltemperatur

$\omega_{max}$     maximaler Drehzahlgradient,

$\alpha_{stopp-soll}$     Soll-Stoppposition,

EVS     Schließposition des Einlassventils.

Aus dem in den obigen Gleichungen definierten Zündwinkelwirkungsgrad wird abschließend ein Zündwinkel-Offset $\Delta_{IGA}$ für die erste Verbrennung berechnet. Dieser Zündwinkel-Offset ist eine Funktion des Zündwinkelwirkungs-grads $\eta_{IGA}$, der Stoppposition $\alpha_{stopp}$ und der Motortemperatur TCO, so dass sich der Zusammenhang ergibt $\Delta_{IGA}=\Delta_{IGA}$ ($\eta_{IGA}$, $\alpha_{Stopp}$, TCO). Dieser Zündwinkel-Offset verschiebt den Zündwinkel in Richtung spät bei einem zu erwartenden maximalen Drehzahlgradienten der Stoppposition $\alpha_{stopp}$, der über dem festgelegten Drehzahlgradienten liegen würde. Auf diese Weise wird die Effizienz der ersten Verbrennung reduziert und somit der tatsächlich erzielte Drehzahlgradient auf das Niveau des festgelegten Drehzahlgradienten verringert.

**Patentansprüche**

1. Verfahren zur Erhöhung der Start-Reproduzierbarkeit bei Start-Stopp-Betrieb einer Brennkraftmaschine eines Kraftfahrzeugs mit Startoptimierung, das die folgenden Schritte aufweist:

   a. Erfassen einer Stoppposition $\alpha_{Stopp}$ der Brennkraftmaschine,
   b. Bestimmen eines mit einer ersten Verbrennung der Startoptimierung möglichen maximalen Drehzahlgradi-enten $\omega_{max}$ in Abhängigkeit von der Stoppposition $\alpha_{stopp}$, einer in einem Zylinder der Brennkraftmaschine vorhandenen Kraftstoffmenge und einer in dem Zylinder vorhandenen Luftmenge bei einem optimalen Zündwinkel und
   c. Reduzieren des maximalen Drehzahlgradienten auf einen festgelegten Drehzahlgradienten, der für verschie-dene Stopppositionen $\alpha_{stopp}$ reproduzierbar ist, indem mit Hilfe einer Zündwinkel-Spätverstellung die Effizienz der ersten Verbrennung oder Verbrennungen und/oder mit einer Einlassventil-Spätverstellung die Zylinderfüllung für die erste Verbrennung oder ersten Verbrennungen gezielt verringert wird.

2. Verfahren gemäß Anspruch 1, mit dem weiteren Schritt:

   Auslesen eines Kennfelds für den maximalen Drehzahlgradienten $\omega_{max}$, das einen maximalen Drehzahlgradi-enten $\omega_{max}(\alpha_{Stopp}, TCO)$ bei optimalem Zündwinkel und optimaler Kraftstoffmenge in Abhängigkeit von der Stoppposition $\alpha_{Stopp}$ und einer Motortemperatur TCO der Brennkraftmaschine angibt.

3. Verfahren gemäß Anspruch 1 oder 2, in dem der festgelegte Drehzahlgradient durch den maximalen Drehzahlgra-dienten $\omega_{max}$ an einer festgelegten Soll-Stoppposition $\alpha_{Stopp-Soll}$ der Brennkraftmaschine definiert ist.

4. Verfahren gemäß Anspruch 3, mit dem weiteren Schritt:

   Bestimmen der Zündwinkel-Spätverstellung für Stopppositionen $\alpha_{Stopp} \leq \alpha_{Stopp-Soll}$ aus einem Zündwinkel-Wir-kungsgrad $\eta_{IGA}$, der sich als Quotient aus dem festgelegten Drehzahlgradienten in Abhängigkeit von der Soll-Stoppposition $\alpha_{stopp-soll}$ und einer Soll-Motortemperatur TCO$_{Soll}$ und dem maximalen Drehzahlgradienten $\omega_{max}$ in Abhängigkeit von der Stoppposition $\alpha_{Stopp}$ und der Motortemperatur TCO gemäß folgender Formel ergibt:

$$\eta_{IGA}\left(\alpha_{Stopp},\ TCO\right) = \frac{\omega_{max}(\alpha_{Stopp-Soll},\ TCO_{Soll})}{\omega_{max}(\alpha_{Stopp},\ TCO)}.$$

5. Verfahren gemäß Anspruch 3, mit dem weiteren Schritt:

   Verringern einer für die erste Verbrennung zur Verfügung stehenden Zylinderfüllung mit Hilfe der Einlassventil-Spätverstellung, wodurch der maximale Drehzahlgradient reduzierbar ist.

**6.** Verfahren gemäß Anspruch 5, in dem bei der Einlassventil-Spätverstellung die Stoppposition $\alpha_{Stopp}$ durch eine Schließposition EVS des Einlassventils mit $\alpha_{Stopp}$=EVS bestimmt ist.

**7.** Verfahren gemäß Anspruch 6, mit dem weiteren Schritt:

Bestimmen der Zündwinkel-Spätverstellung bei Anwendung der Einlassventil-Spätverstellung für die Stoppposition $\alpha_{Stopp} \leq \alpha_{Stopp-Soll}$ und die Schließposition EVS$\leq \alpha_{Stopp-Soll}$ aus einem Zündwinkel-Wirkungsgrad $\eta_{IGA}$, der sich als Quotient aus dem festgelegten Drehzahlgradienten in Abhängigkeit von einer Soll-Motortemperatur TCO$_{Soll}$ und dem maximalen Drehzahlgradienten $\omega_{max}$ in Abhängigkeit von der Stoppposition $\alpha_{Stopp}$ und der Motortemperatur TCO gemäß folgender Formel ergibt:

$$\eta_{IGA}\left(\alpha_{Stopp}, TCO\right) = \frac{\omega_{max}(\alpha_{Stopp-Soll}, TCO_{Soll})}{\omega_{max}(\alpha_{Stopp} = EVS, TCO)}.$$

**8.** Verfahren gemäß Anspruch 4 oder 7, mit den weiteren Schritten:

Bestimmen der Zündwinkel-Spätverstellung für die erste Verbrennung mit Hilfe eines Zündwinkel-Offsets $\Delta_{IGA}$ über die Funktion $\Delta_{IGA}=\Delta_{IGA}$ ($\eta_{IGA}$, $\alpha_{Stopp}$, TCO) und Verschieben des optimalen Zündwinkels der ersten Verbrennung um den Zündwinkel-Offset in Richtung spät.

**Claims**

**1.** Method for increasing the reproducibility of the start-up in the start-stop operation of an internal combustion engine of a motor vehicle with start optimisation, which method comprises the following steps:

a. Detecting a stop position $\alpha_{Stopp}$ of the internal combustion engine,
b. Determining a possible maximum speed gradient $\omega_{max}$ achievable with an initial combustion of the start optimisation, subject to the stop position $\alpha_{stopp}$, with a volume of fuel present in a cylinder of the internal combustion engine and with a volume of air present in the cylinder at an optimal ignition angle and
c. Reducing the maximum speed gradient to a set speed gradient, which gradient is reproducible for different stop positions $\alpha_{stopp}$, by using an ignition angle retard and/or by using an inlet valve timing retard to specifically reduce the cylinder charge for the initial combustion or initial combustions.

**2.** Method according to claim 1, with the additional step:

Reading out an engine characteristic map for the maximum speed gradient $\omega_{max}$, which map shows a maximum speed gradient $\omega_{max}$ ($\alpha_{Stopp}$, TCO) at an optimal ignition angle and with optimal volume of fuel subject to the stop position $\alpha_{Stopp}$ and an engine temperature TCO of the internal combustion engine.

**3.** Method according to claim 1 or 2, in which the set speed gradient is defined by the maximum speed gradient $\omega_{max}$ at a set reference stop position $\alpha_{Stopp-Soll}$ of the internal combustion engine.

**4.** Method according to claim 3, with the additional step:

Determining the ignition angle retard for stop positions $\alpha_{Stopp} \leq \alpha_{Stopp-Soll}$ from an ignition angle efficiency $\eta_{IGA}$, which results as a quotient from the set speed gradient as a function of the reference stop position $\alpha_{stopp-soll}$ and with a reference engine temperature TCO$_{Soll}$ and the maximum speed gradient $\omega_{max}$ as a function of the stop position $\alpha_{Stopp}$ and the engine temperature TCO according to the following formula:

$$\eta_{IGA}\left(\alpha_{Stopp},\ TCO\right)\ =\ \frac{\omega_{\max}(\alpha_{Stopp-Soll},\ TCO_{Soll})}{\omega_{\max}(\alpha_{Stopp},\ TCO)}\ .$$

**5.** Method according to claim 3, with the additional step:

Reduction of a cylinder charge available for the initial combustion with the help of the inlet valve timing retard, whereby the maximum speed gradient can be reduced.

**6.** Method according to claim 5, wherein, in the inlet valve timing retard, the stop position $\alpha_{Stopp}$ is determined by a close position EVS of the inlet valve with $\alpha_{Stopp}$=EVS.

**7.** Method according to claim 6, with the additional step:

Determining the ignition angle retard when using the inlet valve timing retard for the stop position $\alpha_{Stopp} \leq \alpha_{Stopp-Soll}$ and the close position EVS$\leq \alpha_{Stopp-Soll}$ from an ignition angle efficiency $\eta_{IGA}$, which results as a quotient from the set speed gradient as a function of the reference engine temperature $TCO_{Soll}$ and from the maximum speed gradient $\omega_{max}$ as a function of the stop position $\alpha_{Stopp}$ and the engine temperature TCO according to the following formula:

$$\eta_{IGA}\left(\alpha_{Stopp},\ TCO\right)\ =\ \frac{\omega_{\max}(\alpha_{Stopp-Soll},\ TCO_{Soll})}{\omega_{\max}(\alpha_{Stopp}\ =\ EVS,\ TCO)}\ .$$

**8.** Method according to claim 4 or 7, with the additional steps:

Determining the ignition angle retard for the initial combustion with the help of an ignition angle offset $\Delta_{IGA}$ using the function $\Delta_{IGA}=\Delta_{IGA}$ ($\eta_{IGA}$, $\alpha_{Stopp}$, TCO) and moving the optimal ignition angle of the initial combustion by the ignition angle offset in the direction retard.

## Revendications

**1.** Procédé pour augmenter la reproductibilité du démarrage en fonctionnement marche-arrêt d'un moteur à combustion interne d'un véhicule automobile avec une optimisation du démarrage, qui comporte les étapes suivantes:

a. Détection d'une position d'arrêt $\alpha_{Stopp}$ du moteur à combustion interne,
b. Détermination d'un gradient maximal de vitesse de rotation $\omega_{maw}$ possible avec une première combustion de l'optimisation du démarrage en fonction de la position d'arrêt $\alpha_{Stopp}$, d'une quantité de carburant présente dans un cylindre du moteur à combustion interne et d'une quantité d'air présente dans le cylindre avec un angle d'allumage optimal et
c. Réduction du gradient maximal de vitesse de rotation jusqu'à un gradient de vitesse de rotation déterminé qui est reproductible pour différentes positions d'arrêt $\alpha_{Stopp}$ en réduisant de manière appropriée le rendement de la première combustion ou des premières combustions à l'aide d'un réglage retardé de l'angle d'allumage et/ou la charge des cylindres pour la première combustion ou les premières combustions avec un réglage retardé de la soupape d'admission.

**2.** Procédé selon la revendication 1, avec l'étape ultérieure suivante:

Extraction d'un diagramme caractéristique pour le gradient maximal de vitesse de rotation $\omega_{maw}$ qui indique un gradient maximal de vitesse de rotation $\omega_{maw}$ ($\alpha_{Stopp,}$TCO) avec l'angle d'allumage optimal et la quantité de carburant optimale en fonction de la position d'arrêt $\alpha_{Stopp}$ et d'une température du moteur TCO du moteur à combustion interne.

**3.** Procédé selon la revendication 1 ou 2, dans lequel le gradient de vitesse de rotation déterminé est défini par le gradient maximal de vitesse de rotation $\omega_{maw}$ dans une position d'arrêt de consigne déterminée $\alpha_{Stopp\text{-}Soll}$ du moteur à combustion interne.

**4.** Procédé selon la revendication 3, avec l'étape ultérieure suivante :

Détermination du réglage retardé de l'angle d'allumage pour les positions d'arrêt $\alpha_{Stopp} \leq \alpha_{Stopp\text{-}Soll}$ à partir d'un rendement de l'angle d'allumage $\eta_{IGA}$ qui est obtenu comme quotient du gradient de vitesse de rotation déterminé en fonction de la position d'arrêt de consigne $\alpha_{Stopp\text{-}Soll}$ et d'une température du moteur de consigne $TCO_{Soll}$ et du gradient maximal de vitesse de rotation $\omega_{maw}$ en fonction de la position d'arrêt $\alpha_{Stopp}$ et de la température du moteur TCO suivant la formule ci-après .

$$\eta_{IGA}\left(\alpha_{Stopp}, TCO\right) = \frac{\omega_{max}(\alpha_{Stopp-Soll}, TCO_{Soll})}{\omega_{max}(\alpha_{Stopp}, TCO)} \cdot$$

**5.** Procédé selon la revendication 3, avec l'étape ultérieure suivante:

Réduction d'une charge du cylindre disponible pour la première combustion à l'aide du réglage retardé de la soupape d'admission, ce qui permet de réduire le gradient maximal de vitesse de rotation.

**6.** Procédé selon la revendication 5, dans lequel, lors du réglage retardé de la soupape d'admission, la position d'arrêt $\alpha_{Stopp}$ est déterminée par une position de fermeture EVS de la soupape d'admission avec $\alpha_{Stopp}$ = EVS.

**7.** Procédé selon la revendication 6, avec l'étape ultérieure suivante:

Détermination du réglage retardé de l'angle d'allumage lors de l'utilisation du réglage retardé de la soupape d'admission pour la position d'arrêt $\alpha_{Stopp} \leq \alpha_{Stopp\text{-}Soll}$ et la position de fermeture EVS $\leq \alpha_{Stopp} \leq \alpha_{Stopp\text{-}Soll}$ à partir d'un rendement de l'angle d'allumage $\eta_{IGA}$ qui est obtenu comme quotient du gradient de vitesse de rotation déterminé en fonction d'une température du moteur de consigne $TCO_{Soll}$ et du gradient maximal de vitesse de rotation $\omega_{maw}$ en fonction de la position d'arrêt $\alpha_{Stopp}$ et de la température du moteur TCO suivant la formule ci-après:

$$\eta_{IGA}\left(\alpha_{Stopp}, TCO\right) = \frac{\omega_{max}(\alpha_{Stopp-Soll}, TCO_{Soll})}{\omega_{max}(\alpha_{Stopp} = EVS, TCO)} \cdot$$

**8.** Procédé selon la revendication 4 ou 7, avec les étapes ultérieures suivantes: Détermination du réglage retardé de l'angle d'allumage pour la première combustion à l'aide d'un décalage de l'angle d'allumage $\Delta_{IGA}$ au moyen de la fonction $\Delta_{IGA} = \Delta_{IGA}(\eta_{IGA}, \alpha_{Stopp}, TCO)$ et déplacement de l'angle d'allumage optimal de la première combustion de la valeur du décalage de l'angle d'allumage dans la direction de retard.

FIG 1

# FIG 2

Start Strategie: 4 Zylinder DI-Engine
Timing erste Verbrennung

Synchronisation    CRK Signal

Stop Position Bereich

TDC#1    TDC#3    TDC#4    TDC#2    TDC#1

Zyl. 1

Zyl. 3    Einlassventil

Auslassventil

Zyl. 4

Zyl. 2

Motor Stopp-Position    Startoptimierung    Konventioneller Start

▨ Einspritzung

# FIG 3

Engine Stop Pos=45° nach OT

Engine Stop Pos=90° nach OT

**EP 1 712 765 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4304163 A1